# EUROPEAN PATENT SPECIFICATION

(11) **EP 4 131 650 B1**
(45) Date of publication and mention of the grant of the patent: **21.08.2024**
(21) Application number: 20936778.8
(22) Date of filing: 30.09.2020
(51) Int. Cl.: H01Q 1/52, H01Q 9/42, H01Q 25/00, H01Q 1/36, H01Q 9/04, H01Q 5/35, H01Q 1/22

(54) **ANTENNA ASSEMBLY AND WIRELESS ACCESS DEVICE**
ANTENNENANORDNUNG UND DRAHTLOSE ZUGANGSVORRICHTUNG
ENSEMBLE ANTENNE ET DISPOSITIF D'ACCÈS SANS FIL

(30) Priority: 22.05.2020 CN 202010444447
(43) Date of publication of application: 08.02.2023
(73) Proprietor: Huawei Technologies Co., Ltd., Shenzhen, Guangdong 518129 (CN)
(72) Inventor: JI, Xinghui, Shenzhen, Guangdong 518129 (CN); YUAN, Bo, Shenzhen, Guangdong 518129 (CN); YAN, Ziliang, Shenzhen, Guangdong 518129 (CN)
(74) Representative: Gill Jennings & Every LLP
(86) International application number: PCT/CN2020/119730
(87) International publication number: WO 2021/232658

(56) References cited:
- CN-A- 103 378 414
- CN-A- 103 811 868
- CN-A- 110 600 878
- CN-U- 208 045 678
- CN-U- 208 045 678
- CN-U- 208 753 510
- US-A1- 2003 193 437
- US-A1- 2016 218 421

## Description

### TECHNICAL FIELD

Embodiments of this application relate to the field of antenna technologies, and in particular, to an antenna assembly and a wireless access device.

### BACKGROUND

A wireless access point (access point, AP) is an access point of a wireless network, and is commonly referred to as a "hot spot". A wireless device (for example, a mobile phone, a mobile device, or a laptop computer) may establish a connection to the wireless access point, so that the wireless access point can provide a wireless network for the wireless device. In addition, the wireless access point may establish a wireless connection to another AP, to expand a coverage area of the wireless network.

A multiple-input multiple-output (multiple input multiple output, MIMO) technology can greatly increase a data throughput (throughput) and a transmit distance of a system without increasing a bandwidth or a total transmit power expenditure (transmit power expenditure). A core concept of MIMO is to effectively improve spectral efficiency of a wireless communications system by using a spatial degree of freedom provided by a plurality of transmit antennas and a plurality of receive antennas, so as to increase a transmission rate and improve communication quality. An existing AP device generally uses a MIMO antenna. With an upgrade of the AP device, a size of the AP device becomes smaller. In addition, with development of communications technologies, more communication frequency bands may be used for wireless communication, so that a quantity of links (or referred to as a quantity of streams) that the AP device can provide is also increasing. Therefore, a quantity of MIMO antennas on a mainboard of the AP device needs to be increased to ensure that the AP device can provide more streams. It may be understood that the MIMO antennas need to be independent of each other to utilize performance of the MIMO antennas, that is, an interval between the MIMO antennas needs to be greater than a preset threshold, so that the MIMO antennas can meet an isolation requirement, and the performance of the MIMO antennas can be utilized.

In addition, in a current AP device, a radio frequency chipset is generally disposed on a mainboard. As a quantity of streams in the AP device increases, a quantity of radio frequency chipsets also increases, so that an area occupied by the radio frequency chipsets also increases. Moreover, because the radio frequency chipsets in the AP device are centrally disposed on the mainboard, space left for another part, for example, an antenna, becomes smaller. Furthermore, when a size of the AP device becomes smaller, for a MIMO antenna in the AP device, space on the mainboard becomes smaller. It is more difficult to design the MIMO antenna.

US 2003/0193437 A1 discloses an antenna structure having a transmit antenna disposed over a first section of a ground plane and a receive antenna disposed over a second section of the ground plane, a cut is provided between the first and second sections of the ground plane. CN208753510U discloses a kind of stereoscopic antenna with isolation mech isolation test of the utility model applied to an embedded radio base station. CN208045678U describes a kind of stereoscopic antenna with the neutral conductor.

### SUMMARY

In a first aspect of the present invention, there is provided an antenna assembly according to claim 1. In a second aspect of the present invention, there is provided a wireless access device according to claim 9.

This application provides an antenna assembly and a wireless access device. Antennas may be disposed together to form the antenna assembly, and an isolation requirement is reduced by disposing parts of the antenna assembly without affecting performance of the antenna, so as to help miniaturize the wireless access device or deploy more antennas. To achieve the foregoing technical objective, this application uses the following technical solutions.

According to a first aspect, this application provides an antenna assembly. The antenna assembly may include a first antenna part and a second antenna part. A first port, a first radiation arm corresponding to the first port, a first ground point corresponding to the first port, and a first bearing part of a bearing plate form the first antenna part. A second port, a second radiation arm corresponding to the second port, a second ground point corresponding to the second port, and a second bearing part of the bearing plate form the second antenna part.

The first antenna part may receive or radiate a radio frequency signal. When the first port in the antenna assembly receives the radio frequency signal, the first radiation arm may be configured to radiate the radio frequency signal received by the first port. When receiving the radio frequency signal, the first radiation arm may transmit the received radio frequency signal to the first port.

The second antenna part may receive or radiate the radio frequency signal. When the second port in the antenna assembly receives the radio frequency signal, the second radiation arm may be configured to radiate the radio frequency signal received by the second port. When receiving the radio frequency signal, the second radiation arm may transmit the received radio frequency signal to the second port.

An anti-interference path is formed between the first port in the first antenna part and the second port in the second antenna part by using the bearing plate, and the anti-interference path is configured to cancel interference caused by coupling between the first radiation arm and the second radiation arm.

The anti-interference path may be formed between the first port and the second port by using the bearing plate. Therefore, the first port may transmit the received radio frequency signal to the second port through the anti-interference path. Alternatively, the second port may transmit the received radio frequency signal to the first port through the anti-interference path. In this way, signal interference caused by coupling between the first radiation arm and the second radiation arm can be canceled. For example, when the first radiation arm radiates a radio frequency signal, if the second radiation arm receives the radio frequency signal radiated by the first radiation arm, interference is caused to the second antenna part, and performance of the second antenna part is affected. Alternatively, when the second radiation arm radiates a radio frequency signal, if the first radiation arm receives the radio frequency signal radiated by the second radiation arm, interference is caused to the first antenna part, and performance of the first antenna part is affected.

The first antenna part and the second antenna part are disposed together to form the antenna assembly, and interference caused by low isolation between antennas is canceled through the anti-interference path, so that performance of the antenna is not affected in a case of the low isolation. This helps miniaturize a wireless access device or deploy more antennas.

In a possible design of the first aspect, the first radiation arm is disposed on a first side of the bearing plate, a part of the first radiation arm is connected to the bearing plate, and a first antenna gap exists between the first radiation arm and the bearing plate. The first port is disposed on a second side of the bearing plate, and the first ground point is disposed on a third side of the bearing plate. The second radiation arm is disposed on the third side of the bearing plate, a part of the second radiation arm is connected to the bearing plate, and a second antenna gap exists between the second radiation arm and the bearing plate. The second port is disposed on a fourth side of the bearing plate, and the second ground point is disposed on the first side of the bearing plate.

Both the first radiation arm and the second radiation arm are configured to radiate a radio frequency signal. The first antenna gap exists between the first radiation arm and the bearing plate, and the second antenna gap exists between the second radiation arm and the bearing plate. This helps the first radiation arm and the second radiation arm radiate or receive the radio frequency signal.

In another possible design of the first aspect, the first antenna part may further include a third radiation arm corresponding to the first port, and the third radiation arm is disposed on the second side of the bearing plate. The second antenna part may further include a fourth radiation arm corresponding to the second port, and the fourth radiation arm is disposed on a fourth side of the bearing plate. The first radiation arm and the second radiation arm may be configured to radiate a low-frequency radio frequency signal, and the third radiation arm and the fourth radiation arm may be configured to radiate a high-frequency radio frequency signal.

It may be understood that the first port is corresponding to the third radiation arm. In other words, the first port may receive two radio frequency signals, so that both the first radiation arm and the third radiation arm that are corresponding to the first port can radiate the radio frequency signals. Similarly, the second port may receive two radio frequency signals, so that both the second radiation arm and the fourth radiation arm that are corresponding to the second port can radiate the radio frequency signals. In this way, the antenna assembly can provide more links.

In another possible design of the first aspect, the first bearing part and the second bearing part are integrally formed to form the bearing plate, or the first bearing part and the second bearing part are connected by using a connection part to form the bearing plate.

The first port, the first radiation arm, the third radiation arm, and the first ground point are disposed on the first bearing part, and the second port, the second radiation arm, the fourth radiation arm, and the second ground point are disposed on the second bearing part.

In another possible design of the first aspect, the first radiation arm is disposed on an end, close to the first port, of the bearing plate, and the third radiation arm is disposed on an end, away from the first radiation arm, of the bearing plate. The second radiation arm is disposed on an end, close to the second port, of the bearing plate, and the fourth radiation arm is disposed on an end, close to the second radiation arm, of the bearing plate.

In another possible design of the first aspect, a sum of a length of the first radiation arm and a width of the first antenna gap is 1/4 of a wavelength of an electromagnetic wave corresponding to a first resonant frequency, and the first radiation arm is configured to receive or radiate a radio frequency signal having the first resonant frequency. A length of the third radiation arm is 1/4 of a wavelength of an electromagnetic wave corresponding to a second resonant frequency, and the third radiation arm is configured to receive or radiate a radio frequency signal having the second resonant frequency.

The sum of the length of the first radiation arm and the width of the first antenna gap is related to a frequency band of the electromagnetic wave radiated by the first radiation arm. Therefore, the frequency band of the electromagnetic wave radiated by the first radiation arm may be adjusted by adjusting the length of the first radiation arm and the width of the first antenna gap. A frequency band of the electromagnetic wave radiated by the third radiation arm may be adjusted by adjusting the length of the third radiation arm.

In another possible design of the first aspect, a sum of a length of the second radiation arm and a width of the second antenna gap is 1/4 of the wavelength of the electromagnetic wave corresponding to the first resonant frequency, and the second radiation arm is configured to receive or radiate the radio frequency signal having the first resonant frequency. A length of the fourth radiation arm is 1/4 of the wavelength of the electromagnetic wave corresponding to the second resonant frequency, and the fourth radiation arm is configured to receive or radiate the radio frequency signal having the second resonant frequency.

The sum of the length of the second radiation arm and the width of the second antenna gap is related to the frequency band of the electromagnetic wave radiated by the first radiation arm. Therefore, the frequency band of the electromagnetic wave radiated by the first radiation arm may be adjusted by adjusting the length of the second radiation arm and the width of the second antenna gap. A frequency band of the electromagnetic wave radiated by the fourth radiation arm may be adjusted by adjusting the length of the fourth radiation arm.

In another possible design of the first aspect, a top, away from the second side, of the first radiation arm is of an arc-shaped structure, and the top, away from the second side, of the first radiation arm faces the first side. In other words, an endpoint position of the first radiation arm is of the arc-shaped structure, and the arc faces the first side.

In another possible design of the first aspect, a top, away from the second side, of the second radiation arm is of an arc-shaped structure, and the top, away from the second side, of the second radiation arm faces the third side. In other words, an endpoint position of the second radiation arm is of the arc-shaped structure, and the arc faces the third side. In another possible design of the first aspect, the bearing plate is a conductor part. The conductor part includes a metal part or a metal plating part.

In another possible design of the first aspect, the antenna assembly may further include a first support part and a second support part. The first support part is disposed at a position of the first antenna gap, and is configured to support the first radiation arm and the bearing plate. The second support part is disposed at a position of the second antenna gap, and is configured to support the second radiation arm and the bearing plate.

According to a second aspect, this application further provides a wireless access device. The wireless access device may include at least one antenna assembly in the first aspect and any possible design of the first aspect, at least two radio frequency chipsets, and a mainboard. A radio frequency output end of each radio frequency chipset is connected to the first port and the second port in the antenna assembly, and a feed ground end on the mainboard is connected to the first ground point and the second ground point in the antenna assembly.

In a possible design of the second aspect, the antenna assembly fits the mainboard, and the antenna assembly is located at a position close to an edge of the mainboard.

In another possible design of the second aspect, the radio frequency chipset includes a first radio frequency chipset and a second radio frequency chipset. The first radio frequency chipset is disposed on a first surface of the mainboard, and the second radio frequency chipset is disposed on a second surface of the mainboard.

The first radio frequency chipset and the second radio frequency chipset are separately disposed on two sides of the mainboard. This may effectively save an area of the mainboard and helps miniaturize the wireless access device.

In another possible design of the second aspect, the wireless access device further includes a matching circuit. An input end of the matching circuit is connected to the output end of the radio frequency chipset, and an output end of the matching circuit is connected to the first port or the second port. The matching circuit is configured to adjust a radio frequency signal received by the first port or the second port.

In another possible design of the second aspect, the wireless access device may include a first antenna assembly and a second antenna assembly. A value of a distance between the first antenna assembly and the second antenna assembly is greater than a preset distance value.

### BRIEF DESCRIPTION OF DRAWINGS

FIG. 1 is a schematic diagram of a three-dimensional structure of an antenna assembly according to an embodiment of this application;
FIG. 2 is a top view of a structure of an antenna assembly according to an embodiment of this application;
FIG. 3 is a top view of a structure of an antenna assembly including a support part according to an embodiment of this application;
FIG. 4 is a schematic structural diagram of another antenna assembly according to an embodiment of this application;
FIG. 5 shows a standing wave ratio of an antenna assembly according to an embodiment of this application;
FIG. 6 shows isolation between a first antenna part and a second antenna part in an antenna assembly according to an embodiment of this application; and
FIG. 7 is a schematic diagram of a hardware structure of a wireless access device according to an embodiment of this application.

### DESCRIPTION OF EMBODIMENTS

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of the embodiments, unless otherwise stated, "a plurality of" means two or more than two.

The following explains terms in the embodiments of this application.

Coupling is a phenomenon that input and output of two or more than two circuit elements or electrical networks closely cooperate with each other and affect each other, and energy is transmitted from one side to another side through interaction. For example, an electromagnetic wave is transmitted from one radiation arm to another radiation arm. Antenna polarization is a direction of electric field strength generated when an antenna radiates an electromagnetic wave. When the direction of the electric field strength is perpendicular to the ground, the wave is called a vertical polarization wave. When the direction of the electric field strength is parallel to the ground, the wave is called a horizontal polarization wave.

A polarization direction is a direction of an electric field of a polarized electromagnetic wave. An antenna polarization direction is a direction of an electric field generated when an antenna radiates an electromagnetic wave. Specifically, the electromagnetic wave includes an electric field and a magnetic field, and a direction of the electric field of the electromagnetic wave when an antenna radiates the electromagnetic wave is the antenna polarization direction. Generally, a radio frequency chipset is disposed on a mainboard of a current AP device. The radio frequency chipset includes a baseband, a radio frequency transceiver, and the like. An output end of the radio frequency chipset is connected to a radio frequency input end of an antenna, and the output end of the radio frequency chipset transmits a radio frequency signal to the radio frequency input end of the antenna, to radiate the radio frequency signal through the antenna. The solution using the radio frequency chipset improves an integration level of the AP device. As a quantity of links (or referred to as a quantity of streams) that the AP device can provide increases, a quantity of radio frequency chipsets also increases, and an area occupied by the radio frequency chipsets also increases. Because the radio frequency chipset is connected to the antenna, the quantity of radio frequency chipsets in the AP device increases, and a quantity of antennas also adaptively increases, so that the AP device can provide more links.

In one case, MIMO antennas are used in the AP device to radiate a radio frequency signal. It may be understood that, when the MIMO antennas are used, it needs to be ensured that radio frequency signals radiated by the MIMO antennas do not interfere with each other, so as to utilize performance of the MIMO antennas. The MIMO antennas are generally arranged on the mainboard of the AP device in a scattered manner. A spatial distance between the MIMO antennas is used to ensure isolation between the MIMO antennas, so as to ensure that the radio frequency signals radiated by the MIMO antennas do not interfere with each other. However, a manner of improving isolation by using the spatial distance between the MIMO antennas causes that the antennas in the AP device occupy relatively large space. Consequently, a size of the AP device is relatively large, and this is not conducive to miniaturizing the AP device.

In another case, a dual-polarized antenna is used in the AP device to radiate a radio frequency signal. It may be understood that an antenna structure of the dual-polarized antenna is an antenna combining radiators in two orthogonal directions: +45° and -45°. The structure enables the dual-polarized antenna to both receive a signal and transmit a signal. The dual-polarized antenna can reduce a value of a distance between two antenna radiators in the AP device, to reduce, to some extent, the size of the AP device. However, it is relatively difficult to design a dual-polarized antenna, and the two antenna radiators in the structure of the dual-polarized antenna are orthogonal. Consequently, the antenna occupies relatively large space in the AP device, and the size of the AP device is also relatively large.

An embodiment of this application provides an antenna assembly. The antenna assembly may include a first antenna part and a second antenna part, and the two antenna parts are disposed on a bearing plate. The two antenna parts can work independently. In this way, the antenna assembly may receive a plurality of input radio frequency signals, and may work in respective frequency bands, so that the antenna assembly can provide a plurality of links.

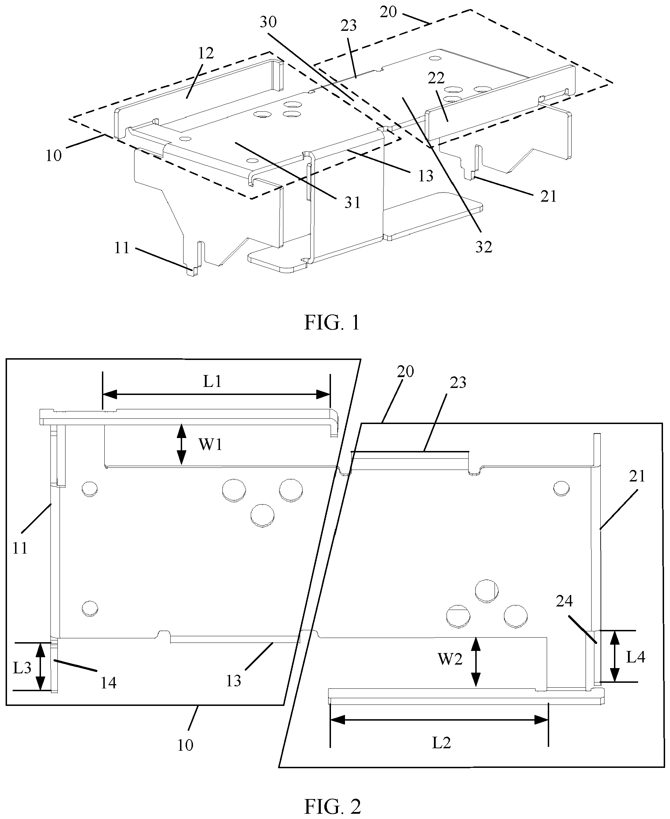

FIG. 1 is a schematic structural diagram of an antenna assembly according to an embodiment of this application. As shown in FIG. 1, the antenna assembly includes a first antenna part 10 and a second antenna part 20. The first antenna part 10 includes a first port 11, and a first radiation arm 12 and a first ground point 13 that are corresponding to the first port 11. The second antenna part 20 includes a second port 21, and a second radiation arm 22 and a second ground point 23 that are corresponding to the second port 21. Both the first antenna part 10 and the second antenna part 20 are disposed on a bearing plate 30. The first antenna part 10 is disposed on a first bearing part 31, and the second antenna part 20 is disposed on a second bearing part 32.

Specifically, the first radiation arm 12 is disposed on a first side of the bearing plate 30, a part of the first radiation arm 12 is connected to the bearing plate 30, and a first antenna gap exists between the first radiation arm 12 and the bearing plate 30. The first port 11 is disposed on a second side of the bearing plate 30, and the first ground point 13 is disposed on a third side of the bearing plate 30. The second radiation arm 22 is disposed on the third side of the bearing plate 30, a part of the second radiation arm 22 is connected to the bearing plate 30, and a second antenna gap exists between the second radiation arm 22 and the bearing plate 30. The second port 21 is disposed on a fourth side of the bearing plate 30, and the second ground point 23 is disposed on the first side of the bearing plate 30. The first side is opposite to the third side, and the second side is opposite to the fourth side.

In some implementations, the first radiation arm 12 in the first antenna part 10 is coupled to the second radiation arm 22 in the second antenna part 20. In other words, when the first radiation arm 12 radiates a radio frequency signal, the second radiation arm 22 may receive the radio frequency signal radiated by the first radiation arm 12. Alternatively, when the second radiation arm 22 radiates a radio frequency signal, the first radiation arm 12 may receive the radio frequency signal radiated by the second radiation arm 22. The first port 11 in the first antenna part 10 and the second port 21 in the second antenna part 20 form an anti-interference path. In other words, when the first port 11 receives a radio frequency signal, the radio frequency signal received by the first port 11 may be transmitted to the second port 21. Alternatively, when the second port 21 receives a radio frequency signal, the radio frequency signal received by the second port 21 may be transmitted to the first port 11. Specifically, when the first port 11 receives a radio frequency signal, the first radiation arm 12 may be configured to radiate the radio frequency signal received by the first port 11. When the first radiation arm 12 radiates the radio frequency signal, the second radiation arm 22 may receive the radio frequency signal radiated by the first radiation arm 12, so that the radio frequency signal radiated by the first radiation arm 12 causes interference to the second antenna part 20. The radio frequency signal received by the first port 11 may be transmitted to the second port 21, and the first port 11 and the second port 21 form the anti-interference path by using the bearing plate 30. The anti-interference path may be configured to cancel interference caused by coupling between the first radiation arm 12 and the second radiation arm 22. In other words, the radio frequency signal that is transmitted by the first port 11 and that is received by the second port 21 may be used to cancel the radio frequency signal that is radiated by the first radiation arm 12 and that is received by the second radiation arm 22, to cancel interference caused to the second antenna part 20 when the first antenna part 10 works.

Generally, if two antennas disposed in one device need to work independently, the two antennas need to meet an antenna isolation requirement. Antenna isolation represents a ratio of power of a signal transmitted by one antenna to power of a signal transmitted by another antenna. For example, if a distance between two antennas is 120 mm (millimeter), the two antennas can meet the antenna isolation requirement. In the antenna assembly provided in this embodiment of this application, the first antenna part 10 and the second antenna part 20 may be spatially coupled, and the anti-interference path is formed on the bearing plate 30, so that the first antenna part 10 and the second antenna part 20 can work independently. As shown in FIG. 1, the first radiation arm 12 is disposed on an end, close to the first port 11, of the bearing plate 30, the second radiation arm 22 is disposed on an end, close to the second port 21, of the bearing plate 30, and the first port 11 and the second port 21 may transmit a radio frequency signal by using the bearing plate 30. Therefore, both a first antenna assembly and a second antenna assembly are disposed on the bearing plate 30. This effectively reduces a size of the antenna.

It may be understood that the radiation arm in the antenna assembly is configured to radiate a radio frequency signal. When the first port 11 receives a radio frequency signal, the first radiation arm 12 may radiate the radio frequency signal. In a possible design, if the first port 11 is corresponding to two radiation arms, and each radiation arm is configured to radiate a corresponding radio frequency signal, the first antenna part 10 may radiate two radio frequency signals. For example, the first antenna part 10 may further include a third radiation arm 14, and the third radiation arm 14 is disposed on the second side of the bearing plate 30. The first radiation arm 12 may be configured to radiate a low-frequency radio frequency signal, and the third radiation arm 14 may be configured to radiate a high-frequency radio frequency signal. For example, the first port 11 is connected to a 2G radio frequency output end and a 5G radio frequency output end. In this case, the first radiation arm 12 corresponding to the first port 11 may radiate a radio frequency signal on a 2G frequency band, and the third radiation arm 14 may radiate a radio frequency signal on a 5G frequency band.

In another possible design, if the second port 21 is corresponding to two radiation arms, and each radiation arm is configured to radiate a corresponding radio frequency signal, the second antenna part 20 may radiate two radio frequency signals. For example, the second antenna part 20 may further include a fourth radiation arm 24, and the fourth radiation arm is disposed on the fourth side of the bearing plate 30. The second radiation arm 22 may be configured to radiate a low-frequency radio frequency signal, and the fourth radiation arm 24 may be configured to radiate a high-frequency radio frequency signal.

As shown in FIG. 2, the third radiation arm 14 is disposed on the second side of the bearing plate 30, and the third radiation arm 14 is disposed on an end away from the first radiation arm 12. The fourth radiation arm 24 is disposed on the fourth side of the bearing plate 30, and the fourth radiation arm 24 is disposed on an end close to the second radiation arm 22.

It may be understood that, when both the first port 11 and the second port 21 are corresponding to two radiation arms, a quantity of radiation arms in the antenna assembly increases, so that the antenna assembly can provide more links. In a process in which the radiation arm radiates an electromagnetic wave, the radiation arm generates resonance, and a length of the radiation arm affects a frequency corresponding to a radio frequency signal radiated by the radiation arm. For example, the first port 11 may receive a first radio frequency signal and a second radio frequency signal. The first radio frequency signal is corresponding to an electromagnetic wave having a first resonant frequency, and the second radio frequency signal is corresponding to an electromagnetic wave having a second resonant frequency. In the first antenna part 10, a sum of a length of the first radiation arm 12 and a width of the first antenna gap is 1/4 of a wavelength of the electromagnetic wave corresponding to the first resonant frequency, and the first radiation arm 12 is configured to receive or radiate a radio frequency signal having the first resonant frequency. A length of the third radiation arm 14 is 1/4 of a wavelength of the electromagnetic wave corresponding to the second resonant frequency, and the third radiation arm 14 is configured to receive or radiate a radio frequency signal having the second resonant frequency. In the second antenna part 20, a sum of a length of the second radiation arm 22 and a width of the second antenna gap is 1/4 of the wavelength of the electromagnetic wave corresponding to the first resonant frequency, and the second radiation arm 22 is configured to receive or radiate the radio frequency signal having the first resonant frequency. A length of the fourth radiation arm 24 is 1/4 of the wavelength of the electromagnetic wave corresponding to the second resonant frequency, and the fourth radiation arm 24 is configured to receive or radiate the radio frequency signal having the second resonant frequency.

As shown in FIG. 2, L1 represents the length of the first radiation arm 12, and W1 represents the width of the first antenna gap. The sum of L 1 and W1 is 1/4 of the wavelength of the electromagnetic wave corresponding to the first resonant frequency. L3 represents the length of the third radiation arm 14, and L3 is 1/4 of the wavelength of the electromagnetic wave corresponding to the second resonant frequency. L2 represents the length of the second radiation arm 22, and W2 represents the width of the second antenna gap. The sum of L2 and W2 is 1/4 of the wavelength of the electromagnetic wave corresponding to the first resonant frequency. L4 represents the length of the fourth radiation arm 24, and L4 is 1/4 of the wavelength of the electromagnetic wave corresponding to the second resonant frequency. In some possible designs, different structures may be designed for the top of the first radiation arm 12. Such an adjustment to the structure of the top of the first radiation arm 12 is merely a change of a shape, without affecting performance of the first radiation arm 12. As shown in FIG. 2, an end, away from the second side, of the first radiation arm 12 is of an arc-shaped structure, and the top, away from the second side, of the first radiation arm 12 faces the first side. In some other possible designs, the top, away from the fourth side, of the second radiation arm 22 is of an arc-shaped structure, and the top, away from the fourth side, of the second radiation arm 22 faces the third side.

It may be understood that the antenna assembly provided in this embodiment of this application may be referred to as a dual-frequency band and dual-feed antenna. In other words, the antenna assembly may receive radio frequency signals on two frequency bands, and the antenna assembly may feed out the radio frequency signals on the two frequency bands. Each antenna part in the antenna assembly includes one port and two radiation arms, so that the antenna part may receive two radio frequency signals, and radiate corresponding radio frequency signals by using the two radiation arms. In other words, the antenna assembly may receive the radio frequency signals on the two frequency bands, and radiate the radio frequency signals on the two frequency bands.

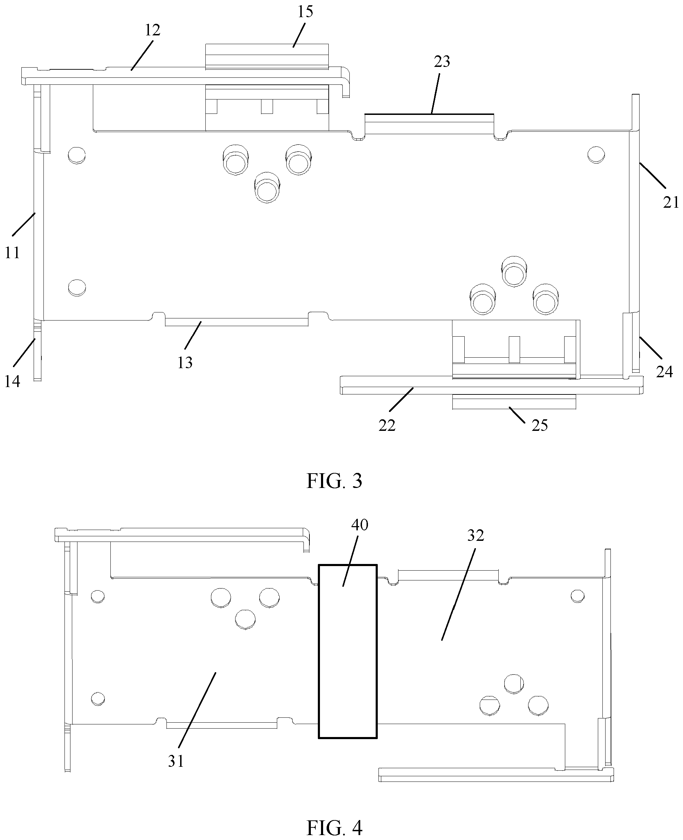

For example, the antenna assembly may further include a first support part 15 and a second support part 25. As shown in FIG. 3, the first support part 15 is disposed at a position of the first antenna gap, and is configured to support the first radiation arm and the bearing plate 30. The second support part 25 is disposed at a position of the second antenna gap, and is configured to support the second radiation arm and the bearing plate 30. Specifically, a gap is disposed at one end of the first support part 15, and the first radiation arm 12 is disposed in the gap. The other end of the first support part 15 is of a snap-fit structure, and the snap-fit structure is configured to clamp the first bearing part 31, to prevent the first support part 15 from sliding on the first radiation arm 12. A structure of the second support part 25 is the same as that of the first support part 15, and details are not described again. Both the first support part 15 and the second support part 25 are made of a non-conductive material.

In the antenna assembly provided in this embodiment of this application, the first antenna part 10 and the second antenna part 20 divide the antenna assembly into two parts. In an implementation, the bearing plate 30 may be a complete metal plate or metal plating plate, and the first bearing part 31 and the second bearing part 32 each are a part of the bearing plate 30. In other words, the first antenna part 10 and the second antenna part 20 divide the antenna assembly into the first antenna part 10 and the second antenna part 20 based on a function and a correspondence with a port. In terms of structure, the antenna assembly includes the first port 11, and the first radiation arm 12, the third radiation arm 14, and the first ground point 13 that are corresponding to the first port 11; and includes the second port 21, and the second radiation arm 22, the fourth radiation arm 24, and the second ground point 23 that are corresponding to the second port 21. The antenna assembly further includes the bearing plate 30.

The bearing plate 30 is a complete metal plate or metal plating plate, and the antenna assembly may be integrally formed. For example, a complete metal plate may be bent or cut to obtain the antenna assembly.

In another implementation, the bearing plate 30 may be formed by combining a plurality of metal parts or metal plating parts. As shown in FIG. 4, the bearing plate 30 includes the first bearing part 31, the second bearing part 32, and a connection part 40. The connection part 40 is configured to connect the first bearing part 31 and the second bearing part 32, to form the bearing plate 30. The first port 11, and the first radiation arm 12, the third radiation arm 14, and the first ground point 13 that are corresponding to the first port 11 are disposed on the first bearing part 31, to form the first antenna part 10. The second port 21, and the second radiation arm 22, the fourth radiation arm 24, and the second ground point 23 that are corresponding to the second port 21 are disposed on the second bearing plate 30, to form the second antenna part 20.

The antenna assembly provided in the embodiments of this application may be applied to a wireless access device, or the antenna assembly may be further applied to an electronic device. For example, the wireless access device in the embodiments of this application may be a router, a wireless controller, a wireless access point, a switch, or the like. In addition, the electronic device in the embodiments of this application may be a mobile phone, a tablet, a desktop computer, a laptop computer, a handheld computer, a notebook computer, a vehicle-mounted device, an ultra-mobile personal computer (ultra-mobile personal computer, UMPC), a netbook, a cellular phone, a personal digital assistant (personal digital assistant, PDA), an augmented reality (augmented reality, AR) device/a virtual reality (virtual reality, VR) device, or the like.

An embodiment of this application further provides a wireless access device. The wireless access device may include at least one antenna assembly, at least two radio frequency chipsets, and a mainboard. The at least two radio frequency chipsets and the at least one antenna assembly are all disposed on the mainboard. The antenna assembly fits the mainboard by using a patch technology, and the antenna assembly is located at a position close to an edge of the mainboard. The wireless access device further includes a matching circuit. An input end of the matching circuit is connected to an output end of the radio frequency chipset, and an output end of the matching circuit is connected to the first port 11 or the second port 21. The matching circuit is configured to adjust a radio frequency signal received by the first port 11 or the second port 21.

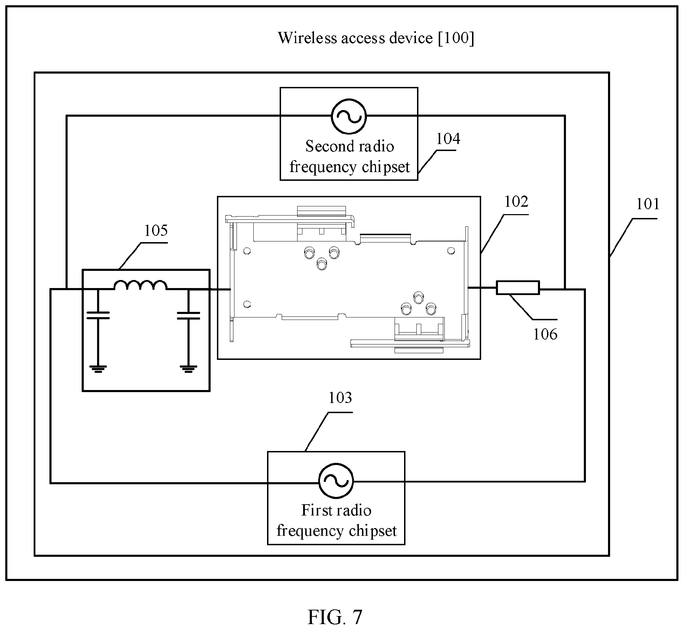

FIG. 7 is a schematic diagram of a hardware structure of a wireless access device according to an embodiment of this application. As shown in FIG. 7, a wireless access device 100 includes a mainboard 101, an antenna assembly 102, a first radio frequency chipset 103, a second radio frequency chipset 104, a first matching circuit 105, and a second matching circuit 106. An output end of the first radio frequency chipset 103 is connected to both an input end of the first matching circuit 105 and an input end of the second matching circuit 106. An output end of the second radio frequency chipset 104 is connected to both the input end of the first matching circuit 105 and the input end of the second matching circuit 106. An output end of the first matching circuit 105 is connected to a first port 11, and an output end of the second matching circuit 106 is connected to a second port 22. A feed ground end on the mainboard 101 is connected to a first ground point 13 and a second ground point 23 (which are not shown in the figure) in the antenna assembly 102.

In some embodiments, matching circuits (for example, the first matching circuit 105 and the second matching circuit 106) are further connected between an input end of an antenna assembly and an output end of a radio frequency chipset, and the matching circuit is specifically set to a π-type matching circuit. Alternatively, a resistive element may be used as a matching circuit. A specific form of the matching circuit is not limited herein. The matching circuit may adjust matched impedance of a first port or a second port, and does not affect isolation between the first port and the second port. A radio frequency output end of the radio frequency chipset is connected to the first port or the second port. If impedance of the first port does not match impedance of the output end of the radio frequency chipset, radiation of a radio frequency signal by the first port is affected, and consequently, the isolation between the first port and the second port is affected. The matching circuit may adjust the matched impedance of the first port or the second port, so that the impedance of the first port is the same as the impedance of the output end of the radio frequency chipset, so as to ensure that the first port or the second port works normally, and the isolation between the first port and the second port is not affected.

It may be understood that, this embodiment of this application uses an example in which the first matching circuit 105 is a π-type matching circuit and the second matching circuit 106 is a resistive element.

The antenna assembly 102 provided in this embodiment of this application may receive two radio frequency signals, and radiate the radio frequency signals by using two radiation arms. The first antenna part 10 and the second antenna part 20 in the antenna assembly 102 may work independently, so that the antenna assembly 103 in the wireless access device 100 can provide more links. This helps miniaturize the wireless access device 100. The antenna assembly 102 provided in this embodiment of this application is used in the wireless access device 100, so that the wireless access device 100 can provide more links, and a problem that a size of the wireless access device 100 is relatively large due to an increase in a quantity of antennas can also be resolved.

In some embodiments, the radio frequency chipsets are separately disposed on two sides of the mainboard 101, so that space on the two sides of the mainboard 101 can be effectively utilized. For example, if the wireless access device includes a 2G radio frequency chipset (the first radio frequency chipset 103) and a 5G radio frequency chipset (the second radio frequency chipset 104), the 2G radio frequency chipset is disposed on a first surface of the mainboard 101, and the 5G radio frequency chipset is disposed on a second surface of the mainboard 101.

It may be understood that, it is assumed that the wireless access device 100 includes a first antenna assembly and a second antenna assembly, to ensure isolation between the first antenna assembly and the second antenna assembly, a value of a distance between the first antenna assembly and the second antenna assembly is greater than a preset distance value. For example, the value of the distance between the first antenna assembly and the second antenna assembly is 120 mm.

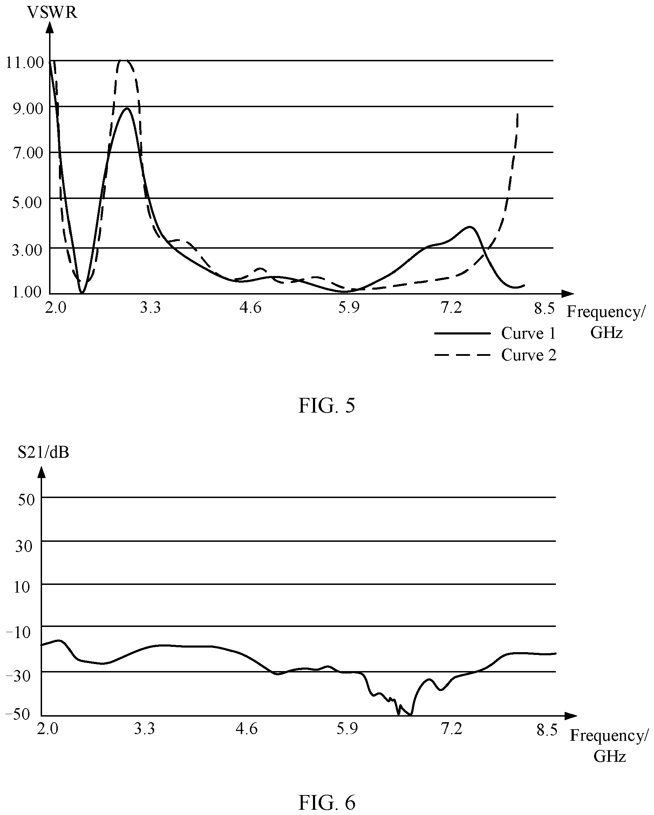

It may be understood that the wireless access device 100 further includes hardware such as a processor and a memory. The memory and the processor are connected through a bus. The bus may include any quantity of internet buses and bridges, and the bus connects various circuits of one or more processors and memories. The bus may further connect various circuits such as a peripheral device, a voltage stabilizer, and a power management circuit. These are all common senses in the art, and therefore are not further described in this specification. A bus interface provides an interface between the bus and a phased array antenna, and data processed by the processor is transmitted to the memory through the interface. The processor is responsible for managing the bus and general processing, and may further provide various functions, including timing, peripheral interface, voltage regulation, power management, and another control function. The memory may be further configured to store data used when the processor performs an operation. The wireless access device 100 provided in the foregoing implementation can provide a plurality of links. This reduces a quantity of antennas disposed in the wireless access device, and helps miniaturize the wireless access device. After the antenna assembly is mounted in the wireless access device 100, a quantity of links in a wireless access system can be increased, and isolation between the first antenna part and the second antenna part in the antenna assembly in the wireless access device 100 can also meet a requirement. FIG. 5 shows standing wave ratios of a first port and a second port in an antenna assembly mounted in a wireless access device. A curve 1 represents the standing wave ratio of the first port, and a curve 2 represents the standing wave ratio of the second port. In other words, the curve 1 represents a voltage standing wave ratio of the first port on a first frequency (2.4 GHz to 2.5 GHz) and a second frequency (5.15 GHz to 5.85 GHz). The curve 2 represents a voltage standing wave ratio of the second port on the first frequency (2.4 GHz to 2.5 GHz) and the second frequency (5.15 GHz to 5.85 GHz). The voltage standing wave ratios shown in FIG. 5 represent an impedance matching degree of the first port and the second port. FIG. 6 shows isolation between a first port and a second port in an antenna assembly. As shown in FIG. 6, a second antenna part radiates a radio frequency signal, and a first antenna part may receive the radio frequency signal radiated by the second antenna part. On a first frequency band (2.4 GHz to 2.5 GHz) and a second frequency band (5.15 GHz to 5.85 GHz) of the antenna assembly, the isolation of the antenna assembly is relatively good.

The foregoing descriptions are merely specific implementations of this application, but are not intended to limit the protection scope of this application. Therefore, the protection scope of this application shall be subject to the protection scope of the claims.

## Claims

1. An antenna assembly, comprising a first port (11), and a first radiation arm (12) and a first ground point (13) that are corresponding to the first port; a second port (21), and a second radiation arm (22) and a second ground point (23) that are corresponding to the second port; and a bearing plate (30), wherein the first port, the first radiation arm, the first ground point, and a first bearing part of the bearing plate form a first antenna part, and the second port, the second radiation arm, the second ground point, and a second bearing part (32) of the bearing plate form a second antenna part, wherein
the first radiation arm is configured to radiate a radio frequency signal received by the first port, and transmit a received radio frequency signal to the first port;
the second radiation arm is configured to radiate a radio frequency signal received by the second port, and transmit a received radio frequency signal to the second port;
an anti-interference path passing through the bearing plate exists between the first port and the second port, and the anti-interference path is configured to cancel interference caused by coupling between the first radiation arm and the second radiation arm; and
wherein the first radiation arm is disposed on a first side of the bearing plate, a part of the first radiation arm is connected to the bearing plate, a first antenna gap exists between the first radiation arm and the bearing plate, the first port is disposed on a second side of the bearing plate, and the first ground point is disposed on a third side of the bearing plate; and
the second radiation arm is disposed on the third side of the bearing plate, a part of the second radiation arm is connected to the bearing plate, a second antenna gap exists between the second radiation arm and the bearing plate, the second port is disposed at a position, opposite to the first port, on a fourth side of the bearing plate, and the second ground point is disposed on the first side of the bearing plate; wherein
the first side is opposite to the third side, and the second side is opposite to the fourth side;
wherein the bearing plate is a conductor part; and the conductor part comprises a metal part or a metal plating part.

2. The antenna assembly according to claim 1, wherein the first antenna part further comprises a third radiation arm (14) corresponding to the first port, and the third radiation arm is disposed on the second side of the bearing plate; and
the second antenna part further comprises a fourth radiation arm (24) corresponding to the second port, and the fourth radiation arm is disposed on the fourth side of the bearing plate; wherein
the first radiation arm and the second radiation arm are configured to radiate a low-frequency radio frequency signal, and the third radiation arm and the fourth radiation arm are configured to radiate a high-frequency radio frequency signal.

3. The antenna assembly according to any one of claim 2, wherein the first bearing part and the second bearing part are integrally formed to form the bearing plate, or the first bearing part and the second bearing part are connected by using a connection part to form the bearing plate; and
the first port, the first radiation arm, the third radiation arm, and the first ground point are disposed on the first bearing part, and the second port, the second radiation arm, the fourth radiation arm, and the second ground point are disposed on the second bearing part.

4. The antenna assembly according to any one of claims 2 or 3, wherein
the first radiation arm is disposed on an end, close to the first port, of the bearing plate, and the third radiation arm is disposed on an end, away from the first radiation arm, of the bearing plate; and
the second radiation arm is disposed on an end, close to the second port, of the bearing plate, and the fourth radiation arm is disposed on an end, close to the second radiation arm, of the bearing plate.

5. The antenna assembly according to any one of claims 2 to 4, wherein a sum of a length of the first radiation arm and a width of the first antenna gap is 1/4 of a wavelength of an electromagnetic wave corresponding to a first resonant frequency, and the first radiation arm is configured to receive or radiate a radio frequency signal having the first resonant frequency; and
a length of the third radiation arm is 1/4 of a wavelength of an electromagnetic wave corresponding to a second resonant frequency, and the third radiation arm is configured to receive or radiate a radio frequency signal having the second resonant frequency.

6. The antenna assembly according to any one of claims 2 to 5, wherein a sum of a length of the second radiation arm and a width of the second antenna gap is 1/4 of the wavelength of the electromagnetic wave corresponding to the first resonant frequency, and the second radiation arm is configured to receive or radiate the radio frequency signal having the first resonant frequency; and
a length of the fourth radiation arm is 1/4 of the wavelength of the electromagnetic wave corresponding to the second resonant frequency, and the fourth radiation arm is configured to receive or radiate the radio frequency signal having the second resonant frequency.

7. The antenna assembly according to any one of claims 1 to 6, wherein a top, away from the second side, of the first radiation arm is of an arc-shaped structure, and the top, away from the second side, of the first radiation arm faces the first side.

8. The antenna assembly according to any one of claims 1 to 7, wherein a top, away from the fourth side, of the second radiation arm is of an arc-shaped structure, and the top, away from the fourth side, of the second radiation arm faces the third side.

9. A wireless access device (100), comprising at least one antenna assembly (102) according to any one of claims 1 to 8, at least two radio frequency chipsets (103, 104), and a mainboard (101), wherein
a radio frequency output end of each radio frequency chipset is connected to the first port and the second port in the antenna assembly, and a feed ground end on the mainboard is connected to the first ground point and the second ground point in the antenna assembly.

10. The wireless access device according to claim 9, wherein the antenna assembly fits the mainboard, and the antenna assembly is located at a position close to an edge of the mainboard.

11. The wireless access device according to claim 9 or 10, wherein the radio frequency chipset comprises a first radio frequency chipset and a second radio frequency chipset, the first radio frequency chipset is disposed on a first surface of the mainboard, and the second radio frequency chipset is disposed on a second surface of the mainboard.

12. The wireless access device according to any one of claims 9 to 11, wherein the wireless access device further comprises a matching circuit, wherein
an input end of the matching circuit is connected to the output end of the radio frequency chipset, and an output end of the matching circuit is connected to the first port or the second port; and
the matching circuit is configured to adjust impedance of the first port or impedance of the second port, so that impedance of the output end of the radio frequency chipset is equal to the impedance of the first port or the impedance of the second port.

13. The wireless access device according to any one of claims 9 to 12, wherein the wireless access device comprises a first antenna assembly and a second antenna assembly, and a value of distance between the first antenna assembly and the second antenna assembly is greater than a preset distance value.

## Patentansprüche

1. Antennenanordnung, die umfasst: einen ersten Anschluss (11) und einen ersten Strahlungsarm (12) und einen ersten Massepunkt (13), die mit dem ersten Anschluss übereinstimmen; einen zweiten Anschluss (21) und einen zweiten Strahlungsarm (22) und einen zweiten Massepunkt (23), die dem zweiten Anschluss entsprechen; und eine Lagerplatte (30), wobei der erste Anschluss, der erste Strahlungsarm, der erste Massepunkt und ein erster Lagerteil der Lagerplatte einen ersten Antennenteil bilden und der zweite Anschluss, der zweite Strahlungsarm, der zweite Massepunkt und ein zweiter Lagerteil (32) der Lagerplatte einen zweiten Antennenteil bilden, wobei der erste Strahlungsarm konfiguriert ist, um ein durch den ersten Anschluss empfangenes Hochfrequenzsignal abzustrahlen und ein empfangenes Hochfrequenzsignal an den ersten Anschluss zu übertragen;
der zweite Strahlungsarm konfiguriert ist, um ein durch den zweiten Anschluss empfangenes Hochfrequenzsignal abzustrahlen und ein empfangenes Hochfrequenzsignal an den zweiten Anschluss zu übertragen;
ein Antistörungspfad, der durch die Lagerplatte verläuft, zwischen dem ersten Anschluss und dem zweiten Anschluss besteht und der Antistörungspfad konfiguriert ist, um die durch eine Kopplung zwischen dem ersten Strahlungsarm und dem zweiten Strahlungsarm verursachte Störung aufzuheben; und
wobei der erste Strahlungsarm auf einer ersten Seite der Lagerplatte angeordnet ist, ein Teil des ersten Strahlungsarms mit der Lagerplatte verbunden ist, ein erster Antennenspalt zwischen dem ersten Strahlungsarm und der Lagerplatte besteht, der erste Anschluss auf einer zweiten Seite der Lagerplatte angeordnet ist und der erste Massepunkt auf einer dritten Seite der Lagerplatte angeordnet ist; und
der zweite Strahlungsarm auf der dritten Seite der Lagerplatte angeordnet ist, ein Teil des zweiten Strahlungsarms mit der Lagerplatte verbunden ist, ein zweiter Antennenspalt zwischen dem zweiten Strahlungsarm und der Lagerplatte besteht, der zweite Anschluss an einer dem ersten Anschluss gegenüberliegenden Position auf einer vierten Seite der Lagerplatte angeordnet ist und der zweite Massepunkt auf der ersten Seite der Lagerplatte angeordnet ist; wobei
die erste Seite der dritten Seite gegenüberliegt und die zweite Seite der vierten Seite gegenüberliegt;
wobei die Lagerplatte ein Leiterteil ist; und der Leiterteil einen Metallteil oder einen Metallplattierungsteil umfasst.

2. Antennenanordnung nach Anspruch 1, wobei der erste Antennenteil ferner einen dritten Strahlungsarm (14) umfasst, der dem ersten Anschluss entspricht, und der dritte Strahlungsarm auf der zweiten Seite der Lagerplatte angeordnet ist; und
der zweite Antennenteil ferner einen vierten Strahlungsarm (24) umfasst, der dem zweiten Anschluss entspricht, und der vierte Strahlungsarm auf der vierten Seite der Lagerplatte angeordnet ist; wobei
der erste Strahlungsarm und der zweite Strahlungsarm konfiguriert sind, um ein niederfrequentes Hochfrequenzsignal abzustrahlen, und der dritte Strahlungsarm und der vierte Strahlungsarm konfiguriert sind, um ein hochfrequentes Hochfrequenzsignal abzustrahlen.

3. Antennenanordnung nach einem der Ansprüche 2, wobei der erste Lagerteil und der zweite Lagerteil einstückig ausgebildet sind, um die Lagerplatte zu bilden, oder der erste Lagerteil und der zweite Lagerteil unter Verwendung eines Verbindungsteils verbunden sind, um die Lagerplatte zu bilden; und
der erste Anschluss, der erste Strahlungsarm, der dritte Strahlungsarm und der erste Massepunkt auf dem ersten Lagerteil angeordnet sind und der zweite Anschluss, der zweite Strahlungsarm, der vierte Strahlungsarm und der zweite Massepunkt auf dem zweiten Lagerteil angeordnet sind.

4. Antennenanordnung nach einem der Ansprüche 2 oder 3, wobei
der erste Strahlungsarm an einem Ende der Lagerplatte nahe des ersten Anschlusses angeordnet ist und der dritte Strahlungsarm an einem Ende der Lagerplatte entfernt von dem ersten Strahlungsarm angeordnet ist; und
der zweite Strahlungsarm an einem Ende der Lagerplatte nahe des zweiten Anschlusses angeordnet, und der vierte Strahlungsarm an einem Ende der Lagerplatte nahe des zweiten Strahlungsarms angeordnet ist.

5. Antennenanordnung nach einem der Ansprüche 2 bis 4, wobei eine Summe einer Länge des ersten Strahlungsarms und einer Breite des ersten Antennenspalts 1/4 einer Wellenlänge einer elektromagnetischen Welle ist, die einer ersten Resonanzfrequenz entspricht, und der erste Strahlungsarm konfiguriert ist, um ein Hochfrequenzsignal mit der ersten Resonanzfrequenz zu empfangen oder abzustrahlen; und
eine Länge des dritten Strahlungsarms 1/4 einer Wellenlänge einer elektromagnetischen Welle beträgt, die einer zweiten Resonanzfrequenz entspricht, und der dritte Strahlungsarm konfiguriert ist, um ein Hochfrequenzsignal mit der zweiten Resonanzfrequenz zu empfangen oder abzustrahlen.

6. Antennenanordnung nach einem der Ansprüche 2 bis 5, wobei eine Summe einer Länge des zweiten Strahlungsarms und einer Breite des zweiten Antennenspalts 1/4 der Wellenlänge der elektromagnetischen Welle ist, die der ersten Resonanzfrequenz entspricht, und der zweite Strahlungsarm konfiguriert ist, um das Hochfrequenzsignal mit der ersten Resonanzfrequenz zu empfangen oder abzustrahlen; und
eine Länge des vierten Strahlungsarms 1/4 der Wellenlänge der elektromagnetischen Welle beträgt, die der zweiten Resonanzfrequenz entspricht, und der vierte Strahlungsarm konfiguriert ist, um das Hochfrequenzsignal mit der zweiten Resonanzfrequenz zu empfangen oder abzustrahlen.

7. Antennenanordnung nach einem der Ansprüche 1 bis 6, wobei eine von der zweiten Seite entfernte Oberseite des ersten Strahlungsarms eine bogenförmige Struktur aufweist und die von der zweiten Seite entfernte Oberseite des ersten Strahlungsarms der ersten Seite zugewandt ist.

8. Antennenanordnung nach einem der Ansprüche 1 bis 7, wobei eine von der vierten Seite entfernte Oberseite des zweiten Strahlungsarms eine bogenförmige Struktur aufweist und die von der vierten Seite entfernte Oberseite des zweiten Strahlungsarms der dritten Seite zugewandt ist.

9. Drahtlose Zugangsvorrichtung (100), die mindestens eine Antennenanordnung (102) nach einem der Ansprüche 1 bis 8, mindestens zwei Hochfrequenz-Chipsätze (103, 104) und eine Hauptplatine (101) umfasst, wobei
ein Hochfrequenzausgangsende jedes Hochfrequenz-Chipsatzes mit dem ersten Anschluss und dem zweiten Anschluss in der Antennenanordnung verbunden ist und ein Einspeisemasseende auf der Hauptplatine mit dem ersten Massepunkt und dem zweiten Massepunkt in der Antennenanordnung verbunden ist.

10. Drahtlose Zugangsvorrichtung nach Anspruch 9, wobei die Antennenanordnung auf die Hauptplatine passt und die Antennenanordnung sich an einer Position nahe einer Kante der Hauptplatine befindet.

11. Drahtlose Zugangsvorrichtung nach Anspruch 9 oder 10, wobei der Hochfrequenz-Chipsatz einen ersten Hochfrequenz-Chipsatz und einen zweiten Hochfrequenz-Chipsatz umfasst, wobei der erste Hochfrequenz-Chipsatz auf einer ersten Oberfläche der Hauptplatine angeordnet ist und der zweite Hochfrequenz-Chipsatz auf einer zweiten Oberfläche der Hauptplatine angeordnet ist.

12. Drahtlose Zugangsvorrichtung nach einem der Ansprüche 9 bis 11, wobei die drahtlose Zugangsvorrichtung ferner eine Anpassungsschaltlogik umfasst, wobei ein Eingangsende der Anpassungsschaltlogik mit dem Ausgangsende des Hochfrequenz-Chipsatzes verbunden ist und ein Ausgangsende der Anpassungsschaltlogik mit dem ersten Anschluss oder dem zweiten Anschluss verbunden ist; und
die Anpassungsschaltlogik konfiguriert ist, um die Impedanz des ersten Anschlusses oder die Impedanz des zweiten Anschlusses so einzustellen, dass die Impedanz des Ausgangsendes des Hochfrequenz-Chipsatzes gleich der Impedanz des ersten Anschlusses oder der Impedanz des zweiten Anschlusses ist.

13. Drahtlose Zugangsvorrichtung nach einem der Ansprüche 9 bis 12, wobei die drahtlose Zugangsvorrichtung eine erste Antennenanordnung und eine zweite Antennenanordnung umfasst und ein Abstandswert zwischen der ersten Antennenanordnung und der zweiten Antennenanordnung größer als ein voreingestellter Abstandswert ist.

## Revendications

1. Ensemble antenne comprenant un premier port (11), un premier bras de rayonnement (12) et un premier point de masse (13) qui correspondent au premier port ; un second port (21), et un deuxième bras de rayonnement (22) et un second point de masse (23) qui correspondent au second port ; et une plaque de support (30), dans lequel le premier port, le premier bras de rayonnement, le premier point de masse et une première partie de support de la plaque de support forment une première partie d'antenne, et le second port, le deuxième bras de rayonnement, le second point de masse et une seconde partie de support (32) de la plaque de support forment une seconde partie d'antenne, dans lequel
le premier bras de rayonnement est configuré pour rayonner un signal radiofréquence reçu par le premier port et transmettre un signal radiofréquence reçu au premier port ; le deuxième bras de rayonnement est configuré pour rayonner un signal radiofréquence reçu par le second port et transmettre un signal radiofréquence reçu au second port ;
un chemin anti-interférence traversant la plaque de support existe entre le premier port et le second port, et le chemin anti-interférence est configuré pour annuler l'interférence causée par le couplage entre le premier bras de rayonnement et le deuxième bras de rayonnement ; et
dans lequel le premier bras de rayonnement est disposé sur un premier côté de la plaque de support, une partie du premier bras de rayonnement est reliée à la plaque de support, un premier espace d'antenne existe entre le premier bras de rayonnement et la plaque de support, le premier port est disposé sur un deuxième côté de la plaque de support, et le premier point de masse est disposé sur un troisième côté de la plaque de support ; et
le deuxième bras de rayonnement est disposé sur le troisième côté de la plaque de support, une partie du deuxième bras de rayonnement est reliée à la plaque de support, un second espace d'antenne existe entre le deuxième bras de rayonnement et la plaque de support, le second port est disposé au niveau d'une position opposée au premier port sur un quatrième côté de la plaque de support, et le second point de masse est disposé sur le premier côté de la plaque de support ; dans lequel le premier côté est opposé au troisième côté, et le deuxième côté est opposé au quatrième côté ;
dans lequel la plaque de support est une partie conductrice ; et la partie conductrice comprend une partie métallique ou une partie de revêtement métallique.

2. Ensemble antenne selon la revendication 1, dans lequel la première partie d'antenne comprend en outre un troisième bras de rayonnement (14)
correspondant au premier port, et le troisième bras de rayonnement est disposé sur le deuxième côté de la plaque de support ; et
la seconde partie d'antenne comprend en outre un quatrième bras de rayonnement (24)
correspondant au second port, et le
quatrième bras de rayonnement est disposé sur le quatrième côté de la plaque de support ; dans lequel
le premier bras de rayonnement et le deuxième bras de rayonnement sont configurés pour rayonner un signal radiofréquence à basse fréquence, et le troisième bras de rayonnement et le quatrième bras de rayonnement sont configurés pour rayonner un signal radiofréquence à haute fréquence.

3. Ensemble antenne selon l'une quelconque de la revendication 2, dans lequel la première partie de support et la seconde partie de support sont formées d'un seul tenant pour former la plaque de support, ou la première partie de support et la seconde partie de support sont reliées à l'aide d'une partie de liaison pour former la plaque de support ; et
le premier port, le premier bras de rayonnement, le troisième bras de rayonnement et le premier point de masse sont disposés sur la première partie de support, et le second port, le deuxième bras de rayonnement, le quatrième bras de rayonnement et le second point de masse sont disposés sur la seconde partie de support.

4. Ensemble antenne selon l'une quelconque des revendications 2 ou 3, dans lequel le premier bras de rayonnement est disposé sur une extrémité, proche du premier port, de la plaque de support, et le troisième bras de rayonnement est disposé sur une extrémité, éloignée du premier bras de rayonnement, de la plaque de support ; et
le deuxième bras de rayonnement est disposé sur une extrémité, proche du second port, de la plaque de support, et le quatrième bras de rayonnement est disposé sur une extrémité, proche du deuxième bras de rayonnement, de la plaque de support.

5. Ensemble antenne selon l'une quelconque des revendications 2 à 4, dans lequel une somme d'une longueur du premier bras de rayonnement et d'une largeur du premier espace d'antenne est égale à 1/4 d'une longueur d'onde d'une onde électromagnétique correspondant à une première fréquence de résonance, et le premier bras de rayonnement est configuré pour recevoir ou rayonner un signal radiofréquence ayant la première fréquence de résonance ; et
une longueur du troisième bras de rayonnement est égale à 1/4 d'une longueur d'onde d'une onde électromagnétique correspondant à une seconde fréquence de résonance, et le troisième bras de rayonnement est configuré pour recevoir ou rayonner un signal radiofréquence ayant la seconde fréquence de résonance.

6. Ensemble antenne selon l'une quelconque des revendications 2
à 5, dans lequel une somme d'une longueur du deuxième
bras de rayonnement et d'une largeur du second espace d'antenne est égale à 1/4 de la longueur d'onde de l'onde électromagnétique correspondant à la première fréquence de résonance, et le deuxième bras de rayonnement est configuré pour recevoir ou rayonner le signal radiofréquence ayant la première fréquence de résonance ; et
une longueur du quatrième bras de rayonnement est égale à 1/4 de la longueur d'onde de l'onde électromagnétique correspondant à la seconde fréquence de résonance, et le quatrième bras de rayonnement est configuré pour recevoir ou rayonner le signal radiofréquence ayant la seconde fréquence de résonance.

7. Ensemble antenne selon l'une quelconque des revendications 1 à 6, dans lequel un sommet, éloigné du deuxième côté, du premier bras de rayonnement a une structure en forme d'arc, et le sommet, éloigné du deuxième côté, du premier bras de rayonnement est orienté vers le premier côté.

8. Ensemble antenne selon l'une quelconque des revendications 1 à 7, dans lequel un sommet, éloigné du quatrième côté, du deuxième bras de rayonnement a une structure en forme d'arc, et le sommet, éloigné du quatrième côté, du deuxième bras de rayonnement est orienté vers le troisième côté.

9. Dispositif d'accès sans fil (100), comprenant au moins un ensemble antenne (102) selon l'une quelconque des revendications 1 à 8, au moins deux jeux de puces radiofréquence (103, 104), et une carte principale (101), dans lequel une extrémité de sortie radiofréquence de chaque jeu de puces radiofréquence est connectée au premier port et au second port de l'ensemble antenne, et une extrémité de masse d'alimentation sur la carte principale est connectée au premier point de masse et au second point de masse de l'ensemble antenne.

10. Dispositif d'accès sans fil selon la revendication 9, dans lequel l'ensemble antenne s'adapte à la carte principale, et l'ensemble antenne est situé au niveau d'une position proche d'un bord de la carte principale.

11. Dispositif d'accès sans fil selon la revendication 9 ou 10, dans lequel le jeu de puces radiofréquence comprend un premier jeu de puces radiofréquence et un second jeu de puces radiofréquence, le premier jeu de puces radiofréquence est disposé sur une première surface de la carte principale, et le second jeu de puces radiofréquence est disposé sur une seconde surface de la carte principale.

12. Dispositif d'accès sans fil selon l'une quelconque des revendications 9 à 11, dans lequel le dispositif d'accès sans fil comprend en outre un circuit d'adaptation, dans lequel
une extrémité d'entrée du circuit d'adaptation est connectée à l'extrémité de sortie du jeu de puces radiofréquence, et une extrémité de sortie du circuit d'adaptation est connectée au premier port ou au second port ; et
le circuit d'adaptation est configuré pour ajuster l'impédance du premier port ou l'impédance du second port, de sorte que l'impédance de l'extrémité de sortie du jeu de puces radiofréquence est égale à l'impédance du premier port ou à l'impédance du second port.

13. Dispositif d'accès sans fil selon l'une quelconque des revendications 9 à 12, dans lequel le dispositif d'accès sans fil comprend un premier ensemble antenne et un second ensemble antenne, et une valeur de distance entre le premier ensemble antenne et le second ensemble antenne est supérieure à une valeur de distance prédéfinie.
